# EUROPEAN PATENT SPECIFICATION

(11) **EP 2 561 004 B1**
(45) Date of publication and mention of the grant of the patent: **02.04.2014**
(21) Application number: 11715888.1
(22) Date of filing: 21.04.2011
(51) Int. Cl.: C08G 64/04

(54) **POLYCARBONATE COPOLYMER**
POLYCARBONATCOPOLYMER
COPOLYMÈRE DE POLYCARBONATE

(30) Priority: 22.04.2010 US 326765 P
(43) Date of publication of application: 27.02.2013
(73) Proprietor: Styron Europe GmbH, 8810 Horgen (CH)
(72) Inventor: LAKEMAN, Pascal E.R.E.J., NL-4624 JH Bergen Op Zoom (NL); JÜPTNER, Günter A., 21714 Hammah (DE); KRUEGER, Marianne, 8636 Wald ZH (CH)
(74) Representative: HOFFMANN EITLE
(86) International application number: PCT/EP2011/002047
(87) International publication number: WO 2011/131366

(56) References cited:
- WO-A1-2010/087742
- GB-A- 1 429 513
- QUINN C B: "The Flammability Properties of Copolyesters and Copolycarbonates Containing Acetylenes", JOURNAL OF POLYMER SCIENCE, POLYMER CHEMISTRY EDITION, INTERSCIENCE PUBLISHERS, NEW YORK, NY, US, vol. 15, 1 January 1977 (1977-01-01), pages 2587-2594, XP003025653, ISSN: 0360-6376

## Description

### FIELD OF THE INVENTION

This invention belongs to the field of polycarbonates. In particular, it relates to a polycarbonate (co)polymer comprising residues of a bisphenol ethynyl and optionally a dihydric phenol, preferably bisphenol-A and methods to make the same.

### BACKGROUND OF THE INVENTION

Historically, flame retardance systems for polycarbonate utilize additives to provide ignition resistance and anti-drip behavior. The most commonly employed flame retardants are organic bromine compounds, organophosphates, siloxane based components, and salts of sulfonic acids including perfluoro alkyl sulfonate salts. Drip inhibition is effectively provided by poly(tetrafluoroethylene), PTFE and PTFE block copolymers. Unfortunately, organic bromine derivatives are prohibited as eco-label additives; organophosphates are most common but more and more unsuitable because of environmental aspects at the levels required for their effectiveness, furthermore they plasticize polycarbonate reducing both continuous use temperature and impact strength to impractical levels; and PTFE is unsuitable because it increases notch sensitivity (thus lowering impact resistance) and due to its crystallinity and refractive index mismatch with polycarbonate which preclude its use in high quality transparent products. Salts of sulfonic acids provide flame retardant properties to polycarbonate in thick samples (3.2 millimeters) for normal or low flow polycarbonate, but for high flow products, they are ineffective without drip inhibitors.

Due to the restraints of conventional flame retardant technology, not unimportantly also related to recycle, waste or incineration considerations, it would be advantageous to have an ignition resistant polycarbonate with a minimum amount of flame retardant additives which also maintains good properties and is transparent. Thus, a need exists for polycarbonates having inherent flame retardancy, in particular reduced heat release, a desirable blend of performance properties, and preferably, maintaining transparency.

### SUMMARY OF THE INVENTION

The present invention provides a polycarbonate comprising residues of:
(i) one or more bisphenol ethynyl having the following formula: 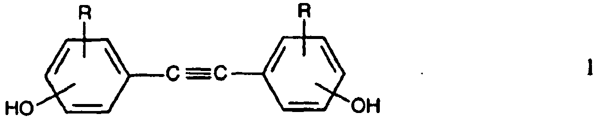 wherein the hydroxyl groups on the phenyl rings may independently be at the ortho, meta, or para positions, respectively and R may independently represent 1, 2, 3, or 4 substituents which may each independently be hydrogen, halogen, alkyl, aryl, or aryl alkyl, alkyl ether, nitrogen oxide, or nitrogen containing groups, respectively, preferably R is independently hydrogen, methyl, isopropyl, cyclohexane, phenyl, t-butyl, fluorine, chlorine, bromine, nitrogen oxide, or benzotriazolyl, and most preferably the bisphenol ethynyl is 1,2-bis(3-hydroxyphenyl)acetylene; 1,2-bis(4-hydroxyphenyl)acetylene; 1-(3-hydroxyphenyl), 2-(4-hydroxyphenyl)acetylene; or mixtures thereof
   and
(ii) optionally one or more dihydric phenol, preferably is bisphenol-A.
   In a preferred embodiment of the present invention, the bisphenol ethynyl is present in an amount of from 0.1 to 100 weight percent, preferably in an amount of from 0.1 to 50 weight percent and the dihydric phenol is present in an amount of from 99.9 to 0 weight percent, preferably in an amount of from 99.9 to 50 weight percent, wherein weight percent is based on the total combined weight of (i) and (ii).
   In another preferred embodiment of the present invention, the polycarbonate copolymer composition described herein above (i) the bisphenol ethynyl is 1,2-bis(3-hydroxyphenyl)acetylene; 1,2-bis(4-hydroxyphenyl)acetylene; or mixtures thereof and is present in an amount of from 0.1 to 50 weight percent, preferably in an amount of from 0.1 to 10 weight percent and (ii) the dihydric phenol is bisphenol-A and is present in an amount of from 99.9 to 50 weight percent, preferably is present in an amount of from 99.9 to 90 weight percent wherein weight percent is based on the total combined weight of (i) and (ii).
   In yet another embodiment of the present invention, the polycarbonate (co)polymer composition described herein above further comprises one or more blending thermoplastic polymer, preferably the blending thermoplastic polymer is a mass polymerized ABS, an emulsion polymerized ABS, a propylene polymer, a propylene copolymer, or mixtures thereof.
   In yet another preferred embodiment the blending polymer is an impact modifier, preferably a styrene ethylene butadiene polymer, a styrene butadiene polymer, a styrene ethylene polymer, or an alpha olefin polymer or copolymer.
   In yet another embodiment of the present invention, the polycarbonate (co)polymer composition described herein above further comprises one or more additive selected from an impact modifier, a filler, a reinforcing material such as glass fiber or carbon fiber (either chopped or continuous), a stabilizer, a pigment, a dye, a mold release, a carbonate, phosphate or hydroxide salt, a metal oxide, a lubricant, a light diffusing agent, or an anti-static agent.
   In yet another embodiment of the present invention, the polycarbonate (co)polymer composition described herein above further comprises (iv) an aromatic phosphorous compound represented by the formula: 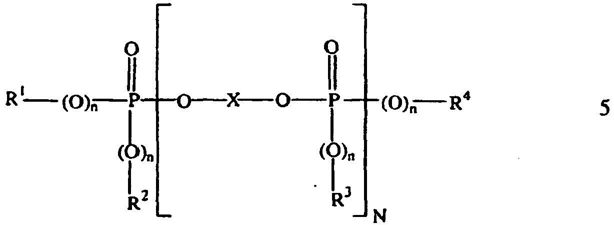 wherein,
   R¹, R², R³ and R⁴ independently of one another each denote optionally halogenated C₁-to C₈-alkyl, or C₅- to C₆- cycloalkyl, C₆- to C₂₀- aryl or C₇- to C₁₂- aralkyl, in each case optionally substituted by alkyl and/or halogen,
   X denotes a mono- or polynuclear aromatic radical having 6 to 30 C atoms,
   n independently of one another is 0 or 1, and
   N represents values from 0 to 30,
(v) a polytetrafluoroethylene polymer, a fluorothermoplast, or mixture thereof, or (vi) a salt of sulfonic acid.

Another embodiment of the present invention is a formed article, sheet, film, foam, laminate or fiber comprising the polycarbonate (co)polymer compositions described herein above.

Another embodiment of the present invention is a method to make a the polycarbonate (co)polymer described herein above comprising the steps of: (a) polymerizing by any suitable polymerization process, preferably via an interfacial polymerization process comprising a phosgenation reaction (i) one or more bisphenol ethynyl having the following formula: 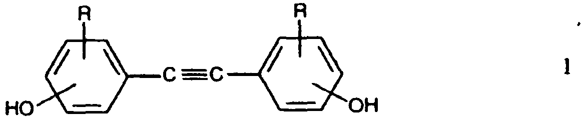 wherein the hydroxyl groups on the phenyl rings may independently be at the ortho, meta, or para positions, respectively and R may independently represent 1, 2, 3, or 4 substituents which may each independently be hydrogen, halogen, alkyl, aryl, or aryl alkyl, alkyl ether, nitrogen oxide, or nitrogen containing groups, respectively with (ii) optionally one or more dihydric phenol and (b) isolating the resulting polycarbonate (co)polymer.

### DETAILED DESCRIPTION OF THE INVENTION

Unless otherwise stated, "weight percent" in reference to the composition of a polycarbonate in this specification is based upon 100 weight percent of the repeating diphenolic residue units of the polycarbonate. For instance, "a polycarbonate comprising 90 weight percent of bisphenol-A" refers to a polycarbonate in which 90 weight percent of the repeating units are residues derived from bisphenol-A or its corresponding derivative(s). Corresponding derivatives include, but are not limited to, corresponding oligomers of the diphenols; corresponding esters of the diphenol and their oligomers; and the corresponding chloroformates of the diphenol and their oligomers.

As used hereinafter, the term "ignition resistant" means reduced or eliminated in tendency to ignite when exposed to a low-energy flame.

As used hereinafter, the term "transparent" means a maximum percent haze of 15 and a minimum percent transmission of 75.

The present invention is a polycarbonate polymer comprising one or more bisphenol ethynyl (the monomer residue is sometimes referred to as a Tolan unit), more preferably the present invention is a polycarbonate copolymer comprising one or more bisphenol ethynyl monomer copolymerized with one or more dihydric phenol. The bisphenol ethynyl monomer of the present invention is known and can be made by a number of processes, for example see: Li et al., Org Proc Res & Dev, 1997, 1, 325 to 332; Bunz et al., Tetrahedron Lett, 1999, 49, 2481 to 2484; and More et al., Chem Lett, 1995, 627 to 628. The bisphenol ethynyl comonomer of the present invention is represented by the following formula: 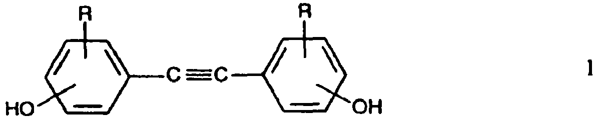 wherein the hydroxyl groups on the phenyl rings may independently be at the ortho, meta, or para positions, respectively and R may independently represent 1, 2, 3, or 4 substituents which may each independently be hydrogen, halogen, alkyl, aryl, or aryl alkyl, alkyl ether, nitrogen oxide, or nitrogen containing groups, respectively, preferably R is independently hydrogen, methyl, isopropyl, cyclohexane, phenyl, t-butyl, fluorine, chlorine, bromine, nitrogen oxide, or benzotriazolyl.

In a preferred embodiment, R is hydrogen in all positions and both hydroxyl groups are in the para positions on each phenyl rings, 1,2-bis(4-hydroxyphenyl)acetylene:

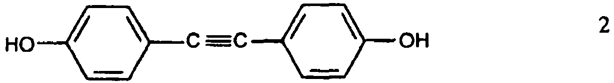

In another preferred embodiment, R is hydrogen on all positions and both hydroxyl groups are in the meta positions on each phenyl rings, 1,2-bis(3-hydroxyphenyl)acetylene:

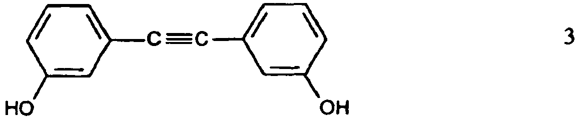

In yet another preferred embodiment, R is hydrogen in all positions on both phenyl rings and one hydroxyl is in the meta position on one phenyl ring and the other hydroxyl is in the para position on the other phenyl ring, 1-(3-hydroxyphenyl), 2-(4-hydroxyphenyl)acetylene:

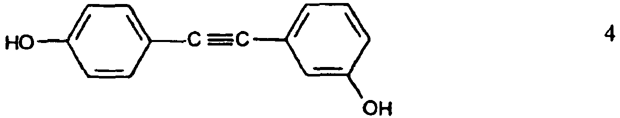

In yet another preferred embodiment, the 1, 2 bisphenol ethynyl for use in the present invention is a mixture of para (2) and meta (3) substituted 1, 2 bisphenol ethynyl comonomers.

Selection of the substitution location on the phenyl ring(s) can be used to tailor the glass transition temperature (T_{g}) of the final polymer to the desired target. For example, the use of para substituted 1, 2 bisphenol ethynyl will yield a polycarbonate (co)polymer having a higher T_{g} as compared to a polycarbonate (co)polymer made with meta substituted 1, 2 bisphenol ethynyl. This tailoring of end product T_{g} allows for product design for specific end product applications, for example for an application requiring higher heat performance a higher T_{g} is desired , however, an application requiring a ease of polymer processing would benefit from a lower T_{g}.

Preferably, the present invention is a polycarbonate copolymer, preferably a random copolymer of one or more bisphenol ethynyl with one or more dihydric phenol. Preferably, the dihydric phenol used in the present invention is 2,2-bis(4-hydroxyphenyl) propane (BPA). Optionally, the polycarbonate copolymer may be further comprised of other dihydric phenol compound residues in an amount up to about 99.9 weight percent of the repeating units in the polycarbonate, thereby replacing the bisphenol-A, of the present invention in the total amount of dihydric phenol compounds utilized.

Examples of such compounds include the following: resorcinol; 4-bromoresorcinol; hydroquinone; 4,4'-dihydroxybiphenyl ether; 4,4-thiodiphenol 1,6-dihydroxynaphthalene; 2,6-dihydroxynaphthalene; bis(4-hydroxyphenyl)methane; bis(4-hydroxyphenyl) diphenylmethane; bis(4-hydroxyphenyl)-1-naphthylmethane; 1,1-bis(4-hydroxyphenyl)ethane; 1,1-bis(4-hydroxyphenyl)propane; 1,2-bis(4-hydroxyphenyl)ethane; 1,1-bis(4-hydroxyphenyl)-1-phenylethane; 1,1-bis(3-methyl-4-hydroxyphenyl)-1-phenylethane; 2-(4-hydroxyphenyl)-2-)3-hydroxyphenyl)propane; 2,2-bis(4-hydroxyphenyl)butane; 1,1-bis(4-hydroxyphenyl)isobutane; 1,1-bis(4-hydroxyphenyl)decane; 1,1-bis(3,5-dimethyl-4-hydroxyphenyl)cyclohexane; 1,1-bis(3,5-dibromo-4-hydroxyphenyl)cyclohexane; 1,1-bis(4-hydroxyphenyl)cyclohexane; 1,1-bis(4-hydroxyphenyl)cyclododecane; 1,1-bis(3,5-dimethyl-4-hydroxyphenyl)cyclododecane; trans-2,3-bis(4-hydroxyphenyl)-2-butene; 4,4-dihydroxy-3,3-dichlorodiphenyl ether; 4,4-dihydroxy-2,5-dihydroxy diphenyl ether; 2,2-bis(4-hydroxyphenyl)adamantane; α,α-bis(4-hydroxyphenyl)toluene bis(4-hydroxyphenyl)acetonitrile; 2,2-bis(3-methyl-4-hydroxyphenyl)propane; 2,2-bis(3-ethyl-4-hydroxyphenyl)propane; 2,2-bis(3-n-propyl-4-hydroxyphenyl)propane; 2,2-bis(3-isopropyl-4-hydroxyphenyl)propane; 2,2-bis(3-sec-butyl-4-hydroxyphenyl)propane; 2,2-bis(3-t-butyl-4-hydroxyphenyl)propane; 2,2-bis(3-cyclohexyl-4-hydroxyphenyl)propane; 2,2-bis(3-allyl-4-hydroxyphenyl)propane; 2,2-bis(3-methoxy-4-hydroxyphenyl)propane; 2,2-bis(3,5-dimethyl-4-hydroxyphenyl)propane; 2,2-bis(2,3,5,6-tetramethyl-4-hydroxyphenyl)propane; 2,2-bis(3-5-dichloro-4-hydroxyphenyl)propane; 2,2-bis(3,5-dibromo-4-hydroxyphenyl)propane; 2,2-bis(2,6-dibromo-3,5-dimethyl-4-hydroxyphenyl)propane; α,α-bis(4-hydroxyphenyl)toluene; α,α, α,α-tetramethylα,α-bis(4-hydroxyphenyl)-p-xylene; 1,1-dichloro-2,2-bis(4-hydroxyphenyl)ethylene; 1,1-dibromo-2,2-bis(4-hydroxyphenyl)ethylene; 1,1-dichloro-2,2-bis(5-phenoxy-4-hydroxyphenyl)ethylene; 4,4'-dihydroxybenzophenone 3,3-bis(4-hydroxyphenyl)-2-butanone; 1,6-bis(4-hydroxyphenyl)-1,6-hexanedione ethylene glycol bis(4-hydroxyphenyl)ether; bis(4-hydroxyphenyl)ether; bis(4-hydroxyphenyl)sulfide; bis(4-hydroxyphenyl)sulfoxide; bis(4-hydroxyphenyl)sulfone; bis(3,5-dimethyl-4-hydroxyphenyl)sulfone;9,9-bis(4-hydroxyphenyl)fluorene; 2,7-dihydroxypyrene 6,6'-dihydroxy-3,3,3',3'-tetramethylspiro(bis)indane("spirobiindane Bisphenol"); 3,3-bis(4-hydroxyphenyl)phthalide; 2,6-dihydroxydibenzo-p-dioxin; 2,6-dihydroxythianthrene 2,7-dihydroxyphenoxathiin; 2,7-dihydroxy-9,10-dimethylphenazine 3,6-dihydroxydibenzofuran; 3,6-dihydroxydibenzothiophene; or 2,7-dihydroxycarbazole.

The dihydric phenols may be used alone or as mixtures of two or more dihydric phenols. Further illustrative examples of dihydric phenols include the dihydroxy-substituted aromatic hydrocarbons disclosed in USP 4,217,438.

In one embodiment, the present invention the polycarbonate is a homopolymer of one or more 1, 2 bisphenol ethynyl, preferably represented by formulas (1), (2), (3), or mixtures thereof.

In another embodiment of the present invention, the polycarbonate is a copolymer comprising one or more 1, 2 bisphenol ethynyl copolymerized with bisphenol-A and one or more dihydric phenol comonomer other than bisphenol-A.

In another embodiment of the present invention, the polycarbonate is a copolymer comprising one or more 1, 2 bisphenol ethynyl copolymerized with one or more dihydric phenol comonomer other than bisphenol-A, in other words, the copolymer would not comprise any bisphenol-A moieties.

In the most preferred embodiment of the present invention, the copolymer is a carbonate copolymer comprising one or more 1, 2 bisphenol ethynyl copolymerized with bisphenol-A.

The 1, 2 diphenol ethynyl monomer is present in an amount of from 0.1 to 100 weight percent based on the total weight of all carbonate forming phenolic monomer(s) present in the polymerization mixture. Preferably, the 1, 2 diphenol ethynyl monomer is present in an amount equal to or greater than about 0.1 weight percent, preferably equal to or greater than about 1 weight percent, preferably equal to or greater than about 2 weight percent, preferably equal to or greater than about 5 weight percent, preferably equal to or greater than about 10 weight percent, preferably equal to or greater than about 15 weight percent, preferably equal to or greater than about 20 weight percent, preferably equal to or greater than about 25 weight percent, preferably equal to or greater than about 30 weight percent, preferably equal to or greater than about 35 weight percent preferably equal to or greater than about 40 weight percent, preferably equal to or greater than about 45 weight percent, wherein weight percent is based on the total weight of all carbonate forming phenolic monomer(s) in the polymerization mixture.

Preferably, the 1, 2 diphenol ethynyl monomer is present in an amount equal to or less than about 100 weight percent based on the total weight of all carbonate forming phenolic monomer(s) present in the polymerization mixture, preferably equal to or less than about 99 weight percent, preferably equal to or less than about 98 weight percent, preferably equal to or less than about 95 weight percent, preferably equal to or less than about 90 weight percent, preferably equal to or less than about 85 weight percent, preferably equal to or less than about 80 weight percent, preferably equal to or less than about 70 weight percent, preferably equal to or less than about 65 weight percent , preferably equal to or less than about 60 weight percent preferably equal to or less than about 55 weight percent, preferably equal to or less than about 50 weight percent, wherein weight percent is based on the total weight of all carbonate forming phenolic monomer(s) in the polymerization mixture.

The one or more dihydric phenol (other than the 1, 2 diphenol ethynyl monomer) is present (independently in the following amounts if there is more than one dihydric phenol) in an amount of from 0 to 99.9 weight percent based on the total weight of all carbonate forming phenolic monomers present in the polymerization mixture. Preferably, the one or more dihydric phenol is present independently in an amount equal to or greater than about 0.1 weight percent, preferably equal to or greater than about I weight percent, preferably equal to or greater than about 2 weight percent, preferably equal to or greater than about 5 weight percent, preferably equal to or greater than about 10 weight percent, preferably equal to or greater than about 15 weight percent, preferably equal to or greater than about 20 weight percent, preferably equal to or greater than about 25 weight percent, preferably equal to or greater than about 30 weight percent , preferably equal to or greater than about 35 weight percent preferably equal to or greater than about 40 weight percent, preferably equal to or greater than about 45 weight percent, wherein weight percent is based on the total weight of all carbonate forming phenolic monomers in the reaction mixture.

Preferably, the one or more dihydric phenol is present independently in an amount equal to or to or less than about 99.9 weight percent based on the total weight of all carbonate forming phenolic monomers present in the polymerization mixture, preferably equal to or less than about 99 weight percent, preferably equal to or less than about 98 weight percent, preferably equal to or less than about 95 weight percent, preferably equal to or less than about 90 weight percent, preferably equal to or less than about 85 weight percent, preferably equal to or less than about 80 weight percent, preferably equal to or less than about 70 weight percent, preferably equal to or less than about 65 weight percent , preferably equal to or less than about 60 weight percent preferably equal to or less than about 55 weight percent, preferably equal to or less than about 50 weight percent, wherein weight percent is based on the total weight of all carbonate forming phenolic monomers in the reaction mixture.

In the polycarbonates of the present invention branching agents may optionally be used and may comprise polyfunctional organic compounds containing at least three functional groups which may be hydroxyl, carboxyl, carboxylic anhydride, haloformyl and mixtures comprising at least one of the foregoing. Specific examples include trimellitic acid; trimellitic anhydride; trimellitic trichloride; tris-(hydroxy phenyl)ethane; isatin-bisphenol; tris-phenol TC (1,3,5-tris((p-hydroxyphenyl)isopropyl)-benzene); tris-phenol PA (4(4(1,1-bis(p-hydroxyphenyl)-ethyl) α,α-dimethyl benzyl)phenol); 4-chloroformyl phthalic anhydride; trimesic acid; benzophenone tetracarboxylic acid, and the like. Preferably, the branching agent is tris-hydroxyphenylethane (THPE).

If present, the branching agents may be added at a level equal to or greater than about 0.01 mole percent, preferably equal to or greater than about 0.05 mole percent, and more preferably equal to or greater than about 0.1 mole percent relative to the amount of dihydric phenol. The branching agents may be added at a level equal to or less than about 2 mole percent, preferably equal to or less than about 1 mole percent, and more preferably equal to or less than about 0.5 mole percent relative to the amount of dihydric phenol.

In the polycarbonates of the present invention a terminating agent may optionally be used. Suitable terminating agents include monovalent aromatic hydroxy compounds, haloformate derivatives of monovalent aromatic hydroxy compounds, monovalent carboxylic acids, halide derivatives of monovalent carboxylic acids, and mixtures thereof. Examples of terminating agents include, but are not limited to, phenol; p-tert-butylphenol; p-cumylphenol; p-cumylphenolcarbonate; undecanoic acid; lauric acid; stearic acid; phenyl chloroformate; t-butyl phenyl chloroformate; p-cumyl chloroformate; chroman chloroformate; octyl phenyl; nonyl phenyl chloroformate; or a mixture thereof. If present, the terminating agent is present in an amount equal to or greater than about 1 mole percent, preferably equal to or greater than about 2 mole percent, and more preferably equal to or greater than about 3 mole percent relative to the dihydric phenol. If present, the terminating agent is present in an amount equal to or less than about 10 mole percent, preferably equal to or less than about 8 mole percent, and more preferably equal to or less than about 5 mole percent relative to the dihydric phenol.

The polycarbonate copolymers of the present invention may be made by any suitable polymerization process. Preferably, the polycarbonate copolymers of the present invention are prepared by an interfacial polymerization process. Interfacial polymerization is well know; see for example the details provided in the USP 3,028,365; 3,334,154; 3,275,601; 3,915,926; 3,030,331; 3,169,121; and 4,188,314, all of which are incorporated herein in their entirety.

Although the reaction conditions of the preparative processes may vary, several of the preferred processes typically involve dissolving or dispersing the bisphenol ethynyl (co)monomer and optionally the dihydric phenol comonomer if present in aqueous caustic soda or potash, adding the resulting mixture to a suitable water immiscible solvent medium and contacting the comonomers with the carbonate precursor, such as phosgene, in the presence of a suitable catalyst such as triethylamine and under controlled pH conditions, e.g., 8-10. The most commonly used water immiscible solvents include methylene chloride, 1,2-dichloroethane, chlorobenzene, toluene, and the like.

A catalyst may be employed to accelerate the rate of polymerization of the dihydroxy phenol reactant with the carbonate precursor. Representative catalysts include, but are not limited to tertiary amines such as triethylamine, quaternary phosphonium compounds, quaternary ammonium compounds, and the like. The preferred process for preparing resins of the present invention comprises the phosgenation reaction. The temperature at which the phosgenation reaction proceeds may vary from below 0°C to about 100°C. The phosgenation reaction preferably proceeds at temperature of from room temperatures (25°C to 80°C). Since the reaction is exothermic, the rate of phosgene addition may be used to control the reaction temperature. The amount of phosgene required will generally depend upon the amount of the bisphenol ethynyl (co)monomer and optionally the amount of dihydric phenol comonomer if present.

The desired degree of polymerization depends on several factors such as efficient mixing of the emulsion, the alkali content of the aqueous phase (e.g., reaction mixture pH), reaction temperature, residence times in different parts of the reactor sequence, etc. Typically, the polycarbonate forming reaction can be run at a pH from above 8.5 to 14, and at a temperature between 0°C to 100°C, although usually not in excess of the boiling point (corrected for the operating pressure) of the solvent used. Frequently, the reaction is run at a temperature of 0°C to 95°C. The desired molecular weight of the polycarbonate is dictated by the ratio of monomer to chain terminator. A chain terminator is typically added to with or after the monomer preparation step, during or after phosgenation step or during or after the oligomerization and/or condensation steps.

The final stage of the interfacial process comprises obtaining the finished polycarbonate (co)polymer. Upon completion of polymerization, the organic and aqueous phases are separated to allow purification of the organic phase and recovery of the polycarbonate product therefrom. The organic phase is washed as needed with dilute acid, water and/or dilute base until free of unreacted monomer, residual process chemicals such as the coupling catalyst and/or other electrolytes. Recovery of the polycarbonate (co)polymer product can be affected by spray drying, steam devolatilization, direct devolatilization in a vented extruder, precipitation by use of an anti-solvent such as toluene, cyclohexane, heptane, methanol, hexanol, or methyl ethyl ketone, or combinations thereof.

Alternatively, the polycarbonate (co)polymer may be prepared by co-reacting in a molten state, the diphenolic monomers and a diaryl carbonate ester, such as diphenyl carbonate, in the presence of a transesterification catalyst in a Banbury mixer, twin screw extruder, or the like to form a uniform dispersion. Volatile monohydric phenol is removed from the molten reactants by distillation and the polymer is isolated as a molten residue.

In another embodiment of the present invention, a polycarbonate homopolymer and/or copolymer comprising 1,2 diphenol ethynyl moieties is melt blended with one or more other polycarbonate homopolymer and/or copolymer comprising one or more of the dihydric phenol moieties listed herein above.

In general, desirable weight average molecular weights for the polycarbonate (co)polymer of the present invention are equal to or greater than about 10,000 gram per mole (g/mole), preferably equal to or greater than about 16,000 g/mole, more preferably equal to or greater than about 18,000 g/mole, more preferably equal to or greater than about 20,000 g/mole, more preferably equal to or greater than about 22,000 g/mole, and even more preferably equal to or greater than about 25,000 g/mole. In order to obtain polymer with minimized levels of gels and other beneficial effects, it has been found that the weight average molecular weight of the polycarbonate (co)polymer of the present invention should be equal to or less than about 100,000 g/mole, preferably equal to or less than about 80,000 g/mole, preferably equal to or less than about 60,000 g/mole, preferably equal to or less than about 45,000 g/mole, preferably equal to or less than about 40,000 g/mole, and more preferably equal to or less than about 35,000 g/mole. Unless otherwise noted, weight average molecular weight is intended when referring to molecular weight.

In another embodiment, the carbonate (co)polymer composition of the present invention comprises a polycarbonate (co)polymer comprising 1,2 diphenyl ethynyl moieties blended with one or more additional thermoplastic polymer a polycarbonate polymer. Suitable thermoplastic blending polymers include, but are not limited to polyolefins (PO) such as polyethylene homo- and copolymers, and polypropylene homo- and copolymers; polyolefin elastomers (POE), such as substantially linear ethylene polymers or one or more linear ethylene polymers (S/LEP); polyesters, such as polyethylene terephthalate (PET) and polybutylene terephthalate (PBT); polyphenylene sulfides (PPS); polysulfane (PSU); polyacetals; polyphenylene oxide (or ether) (PPO or PPE); polyamides (PA); styrenic polymers, such as polystyrene (PS), high impact polystyrene (HIPS), styrene and acrylonitrile copolymer (SAN), acrylonitrile, styrene, and acrylic ester copolymer (ASA), acrylonitrile, ethylene-propylene, and styrene copolymer (AES), styrene and maleic anhydride copolymer (SMA), impact modifiers, for example butyl rubber, chlorinated polyethylene rubber (CPE), chlorosulfonated polyethylene rubber, an olefin polymer or copolymer such as ethylene/propylene copolymer (EP), ethylene/styrene copolymer (ES), ethylene, propylene, and diene copolymer (EPDM), styrene, ethylene and butadiene terpolymer, a styrene and butadiene polymer, a styrene and ethylene polymer, an alpha olefin polymer or copolymer, styrene, ethylene, butylene, and styrene block copolymers (SEBS), core shell type rubbers such as methylmethacrylate, butadiene, and styrene (MBS); a silicon-containing graft copolymer, preferably a silicon-containing graft (co)polymer having a core-shell morphology, including a grafted shell that contains polymerized alkyl(meth)acrylate and a composite rubber core that contains polyorganosiloxane and poly(meth)alkyl acrylate components, a thermoplastic elastomer (TPE), an engineering thermoplastic elastomer (COPE), an urethane based engineering thermoplastic elastomer, a functional olefin polymer such as glycidyl (meth)methacrylate (GMA), methylmethacrylate (MMA), acrylic acid (AA) grafted polymers and copolymers, a recycled polymer composition, an olefin block copolymer (OBC), a liquid crystal polymer, and mixtures thereof. A most preferable thermoplastic polymer for blending with the polycarbonate (co)polymer of the present invention is acrylonitrile-butadiene-styrene (ABS) copolymers, which are typically grafts of styrene or substituted styrenes and acrylonitrile or substituted acrylonitriles on a previously formed diene polymer backbone (e.g., polybutadiene or polyisoprene).

When more than one thermoplastic blending polymer is present, the individual thermoplastic blending polymers may be melt blended individually into the polycarbonate (co)polymer composition of the present invention, they may be pre-melt blended together then added to (melt blended into) the polycarbonate (co)polymer composition of the present invention, or a two or more may be pre-melt blended with additional ones melt blended individually.

Styrene and substituted styrenes are vinyl aromatic monomers having one or more alkyl, alkoxyl, hydroxyl or halo substituent groups attached to the aromatic ring, including, e.g., α-methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers.

Acrylonitriles are examples of "monoethylenically unsaturated nitrile monomers" which are acyclic compounds that includes a single nitrile group and a single site of ethylenic unsaturation per molecule. Other monoethylenically unsaturated nitrile monomers include, for example, methacrylonitrile and α-chloro acrylonitrile.

Suitable acrylonitrile-butadiene-styrene copolymers may be produced by any method known in the art. In a preferred embodiment of the present invention, a suitable ABS is a high rubber graft acrylonitrile-butadiene-styrene copolymer produced in a process which includes an emulsion polymerization step. The phrase "high rubber graft" refers generally to graft copolymer resins wherein at least about 30 weight percent, preferably at least about 45 weight percent of the rigid polymeric phase is chemically bound or grafted to the elastomeric substrate phase. Suitable ABS-type high rubber graft copolymers are commercially available from, for example, GE Plastics, Inc. under the trademark BLENDEX™ and include grades 131, 336, 338, 360, and 415. In another preferred embodiment of the present invention, a suitable ABS is one produced in a process which includes a mass polymerization step, so-called bulk ABS. In yet another embodiment of the present invention, the ABS may be one or more emulsion polymerized ABS and one or more mass ABS polymerized ABS.

The blending thermoplastic polymer, such as acrylonitrile-butadiene-styrene copolymer may typically be present in an amount equal to or greater than about 3 parts by weight, preferably equal to or greater than about 5 parts by weight, and more preferably equal to or greater than about 7 parts by weight based on the total weight of the composition. The blending thermoplastic polymer, such as acrylonitrile-butadiene-styrene copolymer may typically be present in an amount equal to or less than about 30 parts by weight, preferably equal to or less than about 20 parts by weight, more preferably equal to or less than about 15 parts by weight, and even more preferably equal to or less than about 10 parts by weight based on the total weight of the composition.

Flame retardant additives may optionally be used in the present invention in an amount equal to or greater than about 0.05 part by weight, preferably equal to or greater than about 0.1 parts by weight, preferably equal to or greater than about 0.5 parts by weight, more preferably equal to or greater than about 1 part by weight, more preferably equal to or greater than about 2 part by weight, and more preferably equal to or greater than about 5 parts by weight based on the total weight of the composition. Flame retardants may optionally be used in the present invention in a range equal to or less than about 30 parts by weight, preferably equal to or less than about 20 parts by weight, preferably equal to or less than about 15 parts by weight, and more preferably equal to or less than about 10 parts by weight based on the total weight of the composition.

A preferred flame retardant additive is one or more aromatic phosphorous compound which is represented by the following formula: 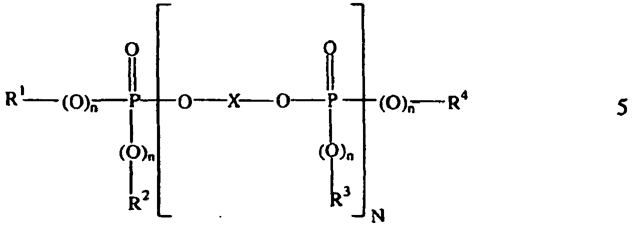 wherein,
R¹, R², R³ and R⁴ independently of one another each denote optionally halogenated C₁- to C₈-alkyl, or C₅- to C₆- cycloalkyl, C₆- to C₂₀- aryl or C₇- to
C₁₂- aralkyl, in each case optionally substituted by alkyl and/or halogen,
X denotes a mono- or polynuclear aromatic radical having 6 to 30 C atoms,
n independently of one another is 0 or 1, and
N represents values from 0 to 30.

Preferred aromatic phosphorous compounds are monophosphates, for example triphenyl phosphate (TPP); oligomeric phosphates, for example resorcinol diphosphate (RDP) or bisphenol-A-bis(diphenylphosphate) (BAPP); and mixtures thereof.

Other flame retardants that may also be included in the composition of the present invention in conjunction with, or in place of, phosphorous compounds, such as anti drip agents, such a polytetrafluoroethylene polymer (PTFE), a fluorothermoplast, or mixtures thereof; salts of sulfonic acids; halogenated compounds, preferably brominated compounds; and combinations thereof.

The polycarbonate (co)polymer composition of the present invention may contain optional additives, such as a pigment or a dye, a tackifier, a mold release agent, a lubricant, a filler, a reinforcing material, a light diffusing agent, etc. Such optional additives are generally known in the art. The amount of a pigment or dye preferably is from 0.0001 to 5 weight percent, if present at all. Lubricants and tackifiers are typically present in an amount of from 0.01 to 2 weight percent. Preferred mold release agents are known esters of long fatty acids; their preferred amount is from 0.01 to 2 weight percent. Preferred fillers are glass fibers and/or talc, the preferred amount is from 1 to 20 weight percent. Preferred light diffusing agents are silicon dioxide (SiO₂), core/shell rubbers, or combinations thereof and are typically present in an amount of from 0.1 to 10 weight percent. All percentages are based on the weight of the polycarbonate (co)polymer composition.

The polymer composition of the present invention may also contain a stabilizer, such as an anti-oxidant and/or a UV stabilizer. Examples of suitable stabilizers are a sulfur containing molecule, a phosphite, hindered phenol, hypophosphite, phosphonite and/or diphosphonite, such as tetrakis-(2,4-di-tert butylphenyl) biphenylene diphosphonite, hydroxide salt, metal oxide, a carbonate such as calcium carbonate, aluminum trihydroxide, a phosphate such as sodium phosphate are the preferred ones, etc. One or more stabilizers are preferably comprised in the polycarbonate (co)polymer composition independently in an amount of from 0.01 to 5 percent, preferably from 0.05 to 2 percent, by the weight of the polycarbonate (co)polymer composition.

When a blending thermoplastic polymer is used, the polycarbonate (co)polymer of the present invention and the one or more blending thermoplastic polymer are conveniently blended by melting the starting resins together with some applied shear. An extruder is a suitable apparatus for performing the mixing operation. The mixture can be immediately melt-processed to form a specific article if desired such as a sheet, film or molded part. The mixture may also be co-extruded on or between sheets or films of other polymers. It is also possible to form the blend into particulates such as pellets to be melt-processed in a subsequent operation.

The polycarbonate (co)polymers of the present invention show a significant improvement in the ability to form char at elevated temperatures, for example temperatures typically encountered under conditions sufficient to ignite and burn a traditional polycarbonate polymer. Not to be held to any theory in particular, we believe that under burning conditions, the increased production of char by the polycarbonate (co)polymers of the present invention results in less fuel available to ignite and propagate burning. This phenomenon is quantified by heat release flammability tests wherein improved heat release (lower values) equate to improved flammability properties (i.e., less likely to ignite, once ignited improved chance to self extinguish, once ignited burn less, reduced flame spread, and the like).

Further, the polycarbonate (co)polymers of the present invention may meet or surpass end-use flammability requirements without the need for flame retardant compounds found in traditional ignition resistant or flame retardant polycarbonate compositions. For example, there may not be a need for halogenated compounds (either as additives or reacted into the polymer back bone), specifically chlorinated or brominated organic or inorganic compounds. Moreover, the compositions of the present invention may not require any monomeric, oligomeric, additive, or reactive type phosphorous compounds.

By virtue of their excellent char forming tendency and good mechanical, physical, and thermal properties the carbonate (co)polymer compositions according to the present invention are suitable for the production of fabricated articles of many kinds, in particular those subject to stringent requirements with regard to mechanical properties and especially requiring good impact resistance and low heat release. Furthermore, a result of meeting flammability requirements without halogen and/or phosphorus additives, the polycarbonate (co)polymers of the present invention may be transparent.

The polycarbonate (co)polymer compositions of the present invention are thermoplastic. When softened or melted by the application of heat, the polycarbonate (co)polymer compositions of this invention can be formed or molded into fabricated articles using conventional techniques such as compression molding, injection molding, gas assisted injection molding, overmolding with or onto a non-polymeric (for instance metal) or polymer substrate (for instance foam) or combination thereof, 2k injection molding, rotational molding, calendaring, vacuum forming, thermoforming, extrusion and/or blow molding, alone or in combination. The polycarbonate (co)polymer compositions can also be fabricated, formed, spun, or drawn into films, fibers, multi-layer laminates, or extruded into sheets and/or profiles. Examples of fabricated articles which may be produced are: enclosures of all kinds, for example for domestic appliances such as juice extractors, coffee machines, food mixers, for office equipment, such as monitors, printers, copiers or cladding sheet for the building sector and automotive components. They may also be used in electrical engineering applications as they have very good electrical properties.

In addition, the present invention provides shaped, formed, or molded articles comprising the polycarbonate (co)polymers of the present invention. Such polycarbonate (co)polymer compositions described herein can be used to produce fabricated articles or shaped articles such as: interior trim for rail vehicles, interior trim for large passenger transportation vehicles in general, more specifically interior trim for airplanes, interior and exterior automotive applications, enclosures for electrical devices containing small transformers, enclosures for information dissemination and transmission devices, enclosures and cladding for medical purposes, massage devices and enclosures therefore, toy vehicles for children, sheet wall elements, enclosures for safety equipment, hatchback spoilers, thermally insulated transport containers, apparatus for keeping or caring for small animals, articles for sanitary and bathroom installations, cover grilles for ventilation openings, articles for summer houses and sheds, and enclosures for garden appliances. Preferred fabricated articles include housings or enclosures such as for: power tools, appliances, consumer electronic equipment such as TVs, VCRs, DVD players, web appliances, electronic books, etc., or housings or enclosures such as for: information technology equipment such as telephones, computers, monitors, fax machines, battery chargers, scanners, copiers, printers, hand held computers, flat screen displays, connectors and plugs, semi-transparent coverings in building and construction, such as multiwall sheet roofing, thick solid sheet glass replacement, office and non office compartment separation shields, interior door windows, caravan windows, wasteable high temperature applications, food processing equipment, food storage applications, water storage applications, and the like.

In order that those skilled in the art will be better able to practice the present invention, the following examples are given by way of illustration and not by way of limitation.

### EXAMPLES

The synthesis of 1,2-bis(3-hydroxyphenyl)acetylene is affected by reacting m-iodophenol with trimethylsilyl acetylene in accordance with the following reaction scheme:

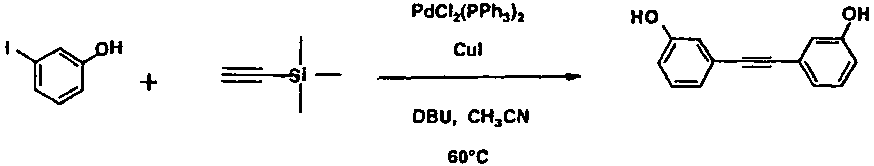

The above reaction is carried out as follows:
There is added 280 parts m-iodophenol to a mixture of 0.25 mol percent PdCl₂(PPh₃)₂ and 0.9 mol percent CuI to a mixture of 55 parts trimethylsilyl acetylene (which can be prepared according to Organic Syntheses, Coll. Vol. 8, p.606 (1993*);* Vol. 65, p. 61 (1987*)*) in 800 millimeters of reaction solvent comprising 1.5/2.5 volume/volume ratio of acetonitrile/1.8-diazabicyco[5.4.0]undec-7-ene (CH₃CN/DBU) at 60°C. The reaction mixture is being stirred and refluxed for 5 hours. 85 grams of 1,2-bis(3-hydroxyphenyl)acetylene is obtained through recrystallization and purification according to conventional procedures. The product is greater than 98 percent pure by HPLC. The structure is confirmed by 1H NMR which complies with the structure indicated as the product in scheme above.

The copolymerization of 1,2-bis(3-hydroxyphenyl)acetylene with bisphenol-A is performed via an interfacial process in a one-liter-reactor outlined herein below. The bisphenols are dissolved in aqueous caustic, dichloromethane is added as the second phase, followed by the phosgenation step. Instead of adding gaseous phosgene to the reaction, for safety reasons a solution of bis(trichloromethyl)carbonate (sometimes referred to as triphosgene) in dichloromethane is used. The reaction is finished by addition of triethyl amine, which acts as a catalyst for fast chain growth. After complete reaction of the reactive end-groups, the process water is separated. Then the polymer solution is purified by several acidic washes with hydrochloric acid and water. After removal of the dichloromethane by evaporation, the polymer is dried under vacuum at elevated temperatures.

A one liter jacketed reactor with bottom cock is equipped with an agitator, a reflux condenser, a thermocouple, a pH-probe, and feed ports for the reagents. The temperature is controlled by a water bath, flushing the jacket of the reactor. The following solutions in dichloromethane are brought to the reactor by feed pumps: triphosgene solution (100mg/ml), p-tert buty phenol (PTPB) solution (10mg/ml), and triethyl amine (TEA) solution (70mg/ml). A suitable phosgene monitoring system is in place.

The bisphenol-A and 1, 2-bis(3-hydroxyphenyl)acetylene are added to the reactor. The reactor is flushed with nitrogen, and 250 ml 1.5molar aqueous caustic is added to the reactor. After the solids have been completely dissolved, 100 ml dichloromethane is added and the agitator is switched on. The agitator is controlled at a speed wherein the two-phase mixture looks homogeneous, about 250 revolutions per minute (RPM). Then, 133ml triphosgene solution is pumped into the reactor over 40 minutes (rate: 3.325 ml/min). Then, based on the targeted chain length, the PTBP solution (chain terminator) is pumped to the reaction, typically within 5 minutes. This is followed by the addition of an additional 66.5ml of triphosgene solution over 20 minutes (rate: 3.325 ml/min). After a reaction time of 10 minutes, the coupling reaction is started by addition of 30 ml of the TEA solution. Coupling is allowed to occur for 10 minutes, during which time the pH is controlled at minimum 12.5 by addition of 6 molar caustic.

The reaction mixture is brought to a separation funnel. After separation of the phases, the heavier organic phase comprising the polymer solution is collected. The lighter aqueous phase is discarded. The organic phase is washed two times with 100 ml of 5 molar hydrochloric acid by mixing and settling in the separation funnel prior to separation. The organic phase is then washed four times with 100 ml pure water. The dichloromethane is removed by evaporation. The resulting polycarbonate copolymer of the present invention is dried overnight in an oven at a temperature between 100°C to 150°C and at reduced pressure (about 10 milibar (mbar)).

Comparative Examples A and B are bisphenol-A (Bis-A) polycarbonate homopolymers having a molar ratio of phenol monomer to terminator of 24 and 31, respectively. Examples 1 and 2 are 1,2-bis(3-hydroxyphenyl)acetylene (Bis-Ace) and bisphenol-A polycarbonate copolymers comprising 27 weight percent 1,2-bis(3-hydroxyphenyl)acetylene, based on the combined weight of the 1, 2-bis(3-hydroxyphenyl)acetylene and bisphenol-A monomer, and having a molar ratio of phenol monomer to terminator of 24 and 31, respectively. The reactant amounts, drying conditions and resultant product polymer characterization are provided in Table 1.

Mechanical, thermal, and flammability property test specimens measuring 3.2mm thick are injection molded on a Demag IntElect 80/370-310 type electrical injection molding machine with the following parameters: Barrel Profile, nozzle to hopper: 290°C to 250°C; Mold Temperature: 80°C; and Cycle Time: 57 seconds. The properties listed in Table 1 are determined by the following test methods:
"Mw", "Mn", and "Mw/Mn" are weight average molecular weight, number average molecular weight, and molecular weight distribution, respectively and are determined by gel permeation chromatography (GPC), values are given as grams per mole (g/mol);
"T_{g}" is glass transition point determined using differential scanning calorimetry (DSC). DSC experiments are performed using a TA Instruments model Q2000 DSC equipped with a refrigerated cooling system. Data is collected using the Thermal Advantage for Q series (version 2.7.0.380) software package and reduced using version 4.4A of the Universal Analysis 2000 software package. The calorimeter is calibrated for temperature with Adamantane (Mp = -64.53 °C), n Octadecane (Mp = 28.24 °C), Indium (Mp = 156.60 °C) and Zinc (Mp = 419.47 °C) at a scan rate of 10 °C/min. The enthalpy signal is calibrated from the Indium (ΔH = 28.71 J/g) analysis. Circa 8 - 10 mg samples are accurately weighed using a Mettler analytical balance. Light-weight (ca 25 mg) Al pans were employed throughout. The pans are crimped to improve sample/pan contact but the seal is not hermetic. The following temperature profile is employed:
Method Log:
1: Equilibrate at 20.00°C
2: Isothermal for 2.00 min
3: Ramp 10.00°C/min to 300.00°C
4: Isothermal for 1.00 min
5: Ramp 10.00°C/min to 20.00°C
6: Isothermal for 2.00 min
7: Ramp 10.00°C/min to 200.00°C
8: End of method
"Vicat" softening temperature is determined in accordance with ISO 306 at 120° per hour and 1 kg;
"Tm" is tensile modulus determined in accordance with ISO 527;
"Fm" is flexural modulus determined in accordance with ISO 178;
"UL-94" is The Underwriters Laboratories' Standard 94 flammability test which is performed on 3.2 millimeter (mm) test specimens. Ratings are according to the standard;
"Char" is determined by thermo gravimetric analysis (TGA) and reported in percent based on the initial sample weight. TGA is a dynamic method in which the weight loss of a sample is measured continuously as either a function of temperature at a constant rate, or a function of time at a constant temperature. The weight retention at 550°C is considered to be a proper measurement of char content that is formed from a sample. The TGA experiments are performed using a TA Instruments model 2950 TGA running on a model 4400 controller with a purge gas flow (N₂ or Air) of 60 ml/min. Data are collected using version 2.3 of the Thermal Solutions software package and reduced using version 4.5A of Universal Analysis 2000 software package. 12 to 15 mg samples are accurately weighed by the calibrated TGA balance and placed on a Pt-pan. The TGA is run according to the following parameters: Temperature Scan Rate: 20°C/min; Minimum Test Temperature: 25°C; and Maximum Test Temperature 850°C; and
"Total HRR", "HRC", and "Peak T" are total heat release, heat release capacity, and peak temperature, respectively and are heat release properties determined by Pulsed Combustion Flow Calorimetry (PCFC) and is evaluated on an instrument at the FAA W.J. Hughes Technical Center at Atlantic City International Airport. The experimental procedures used are based on the procedures used by the FAA, for details see "Pyrolysis Combustion Flow Calorimeter: A Tool To Assess Flame Retarded PC/ABS Material?", Bernhard Schartel, Kristen H. Pawlowski, and Richard E. Lyon, Thermochimica Acta, 462 (2007), 1-14 and USP 6,464,391, incorporated herein in its entirety. A 1 mg sample is loaded into a small quartz tube and placed into the platinum coil element of the pyrotube. The pyrotube is then placed into the system after a brief equilibrium. Samples are heated at a programmed heating rate of 5°C per second from the ambient temperature up to 1200°C and then held isothermally for 20 to 30 seconds at 1200°C. The start temperature setting for the pyrotube is taken to be 40 to 50°C below the observed onset of decomposition as measured by TGA. The interface temperature is about 5 to 10°C below the measured TGA-detected onset temperature. The char yield from the experiment is taken as the sample mass measurement before and after PCFC testing. HRR, HRC, and Peak T are read from resulting heat release curves.

**Table 1**

| Comparative Example | A | B | | |
|---|---|---|---|---|
| Example | | | 1 | 2 |
| Reactant Amounts | | | | |
| Bis-A, g | 34.2 | 34.2 | 24.4 | 24.4 |
| Bis-Ace, g | - | - | 9.03 | 9.03 |
| PTBP, g | 0.955 | 0.715 | 0.955 | 0.715 |
| TEA, ml | 2.75 | 2.75 | 2.75 | 2.75 |
| Reaction Conditions | | | | |
| Drying, °C | 150 | 150 | 100 | 150 |
| Polymer Characterization | | | | |
| Mw, g/mole | 18,750 | 29.090 | 18,850 | 24,840 |
| Mn, g/mole | 8,180 | 10,220 | 7,150 | 8,610 |
| Mw/Mn | 2.3 | 2.8 | 2.6 | 2.9 |
| T_{g}, °C | 145 | 150 | 130 | 132 |
| Vicat, °C | 150 | 155 | 131 | 133 |
| Tm, MPa/m² | 2,250 | 2,310 | 2210 | 2,550 |
| Fm, MPa/m² | 2,230 | 2,175 | 2185 | 2,560 |
| UL 94 rating | V.2 | V-2 | V-0 | V-0 |
| Char under N2, % | 19 | 19.4 | 31.4 | 31.5 |
| Char under air, % | 29 | 28 | 43 | 42 |
| Total HRR, kJ/g | 21.3 | 21.3 | 15.4 | 14.9 |
| HRC, J/g-K | 485 | 561 | 382 | 340 |
| Peak T, °C | 504 | 509 | 495 | 520 |

## Claims

1. A polycarbonate (co)polymer composition comprising residues of:
(i) one or more bisphenol ethynyl having the following formula: 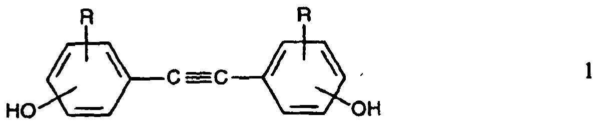 wherein the hydroxyl groups on the phenyl rings may independently be at the ortho, meta, or para positions, respectively and R may independently represent 1, 2, 3, or 4 substituents which may each independently be hydrogen, halogen, alkyl, aryl, or aryl alkyl, alkyl ether, nitrogen oxide, or nitrogen containing groups, respectively
and
(ii) optionally one or more dihydric phenol.

2. The polycarbonate (co)polymer composition of Claim 1 wherein R is independently hydrogen, methyl, isopropyl, cyclohexane, phenyl, t-butyl, fluorine, chlorine, bromine, nitrogen oxide, or benzotriazolyl.

3. The polycarbonate copolymer composition of Claim 1 wherein
(i) the bisphenol ethynyl is 1,2-bis(3-hydroxyphenyl)acetylene; 1, 2-bis(4-hydroxyphenyl)acetylene; 1-(3-hydroxyphenyl), 2-(4-hydroxyphenyl)acetylene; or mixtures thereof
and
(ii) the dihydric phenol is bisphenol-A.

4. The polycarbonate copolymer composition of Claim 1 wherein
(i) the bisphenol ethynyl is present in an amount of from 0.1 to 50 weight percent and
(ii) the dihydric phenol is present in an amount of from 99.9 to 50 weight percent, wherein weight percent is based on the total combined weight of (i) and (ii).

5. The polycarbonate copolymer composition of Claim 1 wherein
(i) the bisphenol is ethylene is 1,2-bis(3-hydroxyphenyl)acetylene; 1, 2-bis(4-hydroxyphenyl)acetylene; or mixtures thereof and is present in an amount of from 0.1 to 50 weight percent
and
(ii) the dihydric phenol is bisphenol-A and is present in an amount of form 99.9 to 50 weight percent,
wherein weight percent is based on the total combined weight of (i) and (ii).

6. The polycarbonate (co)polymer composition of Claim 1 further comprises one or more blending thermoplastic polymer.

7. The polycarbonate (co)polymer composition of Claim 6 wherein the blending thermoplastic polymer is an impact modifier.

8. The polycarbonate (co)polymer composition of Claim 6 wherein the blending thermoplastic polymer is mass polymerized ABS, emulsion polymerized ABS, a propylene polymer, a propylene copolymer, or mixtures thereof.

9. The polycarbonate (co)polymer composition of Claims 1 or 6 further comprises one or more additive selected from a filler, a reinforcing material, a stabilizer, a pigment, a dye, a mold release, a carbonate, phosphate or hydroxide salt, a metal oxide, a lubricant, a light diffusing agent, or an anti-static agent.

10. The polycarbonate (co)polymer composition of Claim 9 wherein the reinforcing material is glass fiber or carbon fiber.

11. The polycarbonate (co)polymer composition of Claims 1 or 6 further comprises one or more of
(iv) an aromatic phosphorous compound represented by the formula: 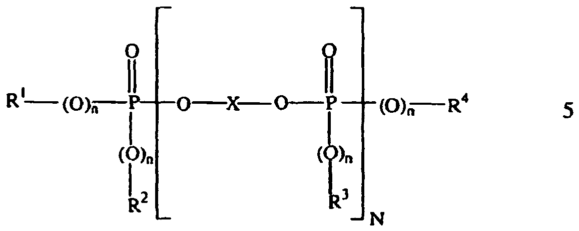 wherein,
R¹, R², R³ and R⁴ independently of one another each denote optionally halogenated C₁- to C₈-alkyl, or C₅- to C₆- cycloalkyl, C₆- to C₂₀- aryl or C₇- to C₁₂- aralkyl, in each case optionally substituted by alkyl and/or halogen,
X denotes a mono- or polynuclear aromatic radical having 6 to 30 C atoms,
n independently of one another is 0 or 1,
N represents values from 0 to 30,
(v) a polytetrafluoroethylene polymer, a fluorothermoplast, or mixture thereof, or
(vi) a salt of sulfonic acid.

12. A formed article, sheet, film, foam, laminate or fiber comprising the polycarbonate (co)polymer composition of Claims 1, 6, or 9.

13. A method to make a polycarbonate (co)polymer comprising the steps of:
(a) polymerizing
(i) one or more bisphenol ethynyl having the following formula: 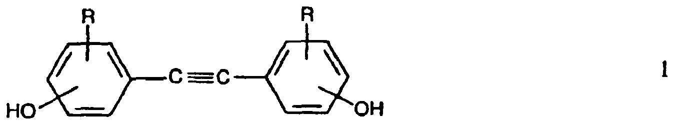 wherein the hydroxyl groups on the phenyl rings may independently be at the ortho, meta, or para positions, respectively and R may independently represent 1, 2, 3, or 4 substituents which may each independently be hydrogen, halogen, alkyl, aryl, or aryl alkyl, alkyl ether, nitrogen oxide, or nitrogen containing groups, respectively
with
(ii) optionally one or more dihydric phenol and
(b) isolating the resulting polycarbonate (co)polymer.

14. The method to make a polycarbonate (co)polymer of Claim 13 wherein the polymerization process is via an interfacial polymerization process comprising a phosgenation reaction.

## Patentansprüche

1. Polycarbonat-(Co)polymerzusammensetzung, umfassend Reste von:
(i) einem oder mehreren Bisphenolethinyl(en) der nachstehenden Formel: 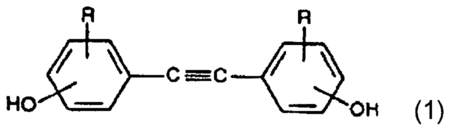 wobei die Hydroxylgruppen an den Phenylringen unabhängig in ortho-, meta- bzw. para-Position sein können und R unabhängig 1, 2, 3 oder 4 Substituenten darstellen kann, die jeweils unabhängig Wasserstoff, Halogen, Alkyl, Aryl oder Arylalkyl, Alkylether, Stickstoffoxid bzw. stickstoffhaltige Gruppen sein können, und
(ii) gegebenenfalls einem oder mehreren zweiwertigen Phenol(en).

2. Polycarbonat-(Co)polymerzusammensetzung gemäss Anspruch 1, worin R unabhängig Wasserstoff, Methyl, Isopropyl, Cyclohexan, Phenyl, t-Butyl, Fluor, Chlor, Brom, Stickstoffoxid oder Benzotriazolyl ist.

3. Polycarbonat-Copolymerzusammensetzung gemäss Anspruch 1, wobei
(i) das Bisphenolethinyl 1,2-Bis(3-hydroxyphenyl)acetylen, 1,2-Bis(4-hydroxyphenyl)acetylen, 1-(3-Hydroxyphenyl), 2-(4-Hydroxyphenyl)acetylen oder Mischungen davon ist,
und
(ii) das zweiwertige Phenol Bisphenol A ist.

4. Polycarbonat-Copolymerzusammensetzung gemäss Anspruch 1, wobei
(i) das Bisphenolethinyl in einer Menge von 0,1 bis 50 Gew.% vorhanden ist,
und
(ii) das zweiwertige Phenol in einer Menge von 99,9 bis 50 Gew.% vorhanden ist,
wobei Gew.% auf dem kombinierten Gesamtgewicht von (i) und (ii) basiert.

5. Polycarbonat-Copolymerzusammensetzung gemäss Anspruch 1, wobei
(i) das Bisphenolethinyl 1,2-Bis(3-hydroxyphenyl)acetylen, 1,2-Bis(4-hydroxyphenyl)acetylen oder Mischungen davon ist und in einer Menge von 0,1 bis 50 Gew.% vorhanden ist und
(ii) das zweiwertige Phenol Bisphenol A ist und in einer Menge von 99,9 bis 50 Gew.% vorhanden ist, wobei Gew.% auf dem kombinierten Gesamtgewicht von (i) und (ii) basiert.

6. Polycarbonat-(Co)polymerzusammensetzung gemäss Anspruch 1, die ferner ein oder mehr gemischte thermoplastische Polymer(e) umfasst.

7. Polycarbonat-(Co)polymerzusammensetzung gemäss Anspruch 6, wobei das gemischte thermoplastische Polymer ein Schlagzähigkeitsmodifikator ist.

8. Polycarbonat-(Co)polymerzusammensetzung gemäss Anspruch 6, wobei das gemischte thermoplastische Polymer massepolymerisierts ABS, emulsionspolymerisiertes ABS, ein Propylenpolymer, ein Propylen-Copolymer oder Mischungen davon ist.

9. Polycarbonat-(Co)polymerzusammensetzung gemäss Anspruch 1 oder 6, das ferner ein oder mehr Additiv(e), ausgewählt aus einem Füllstoff, einem Verstärkungsmaterial, einem Stabilisators, einem Pigment, einem Farbstoff, einem Formtrennmittel, einem Carbonat-, Phosphat- oder Hydroxidsalz, einem Metalloxid, einem Gleitmittel, einem Lichtstreuungsmittel oder einem Antistatikmittel, umfasst.

10. Polycarbonat-(Co)polymerzusammensetzung gemäss Anspruch 9, wobei das Verstärkungsmaterial Glasfasern oder Kohlenstoffasern ist.

11. Polycarbonat-(Co)polymerzusammensetzung gemäss Anspruch 1 oder 6, das ferner eines oder mehrere von:
(iv) einer aromatischen Phosphorverbindung der Formel 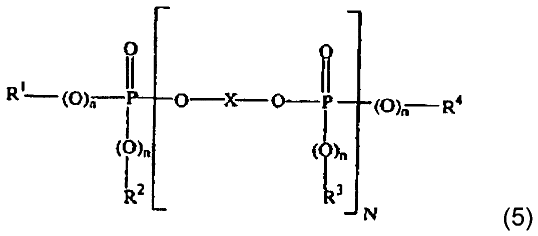 worin
R¹, R², R³ und R⁴ jeweils unabhängig voneinander gegebenenfalls halogeniertes C₁₋₈-Alkyl oder C₅₋₆-Cycloalkyl, C₆₋₂₀-Aryl oder C₇₋₁₂-Aralkyl bezeichnen, die jeweils gegebenenfalls mit Alkyl und/oder Halogen substituiert sind,
X einen ein- oder mehrkernigen aromatischen Rest mit 6 bis 30 C-Atomen bezeichnet,
n jeweils unabhängig voneinander 0 oder 1 ist,
N einen Wert von 0 bis 30 darstellt,
(v) einem Polytetrafluorethylenpolymer, einem Fluorthermoplasten oder Mischungen davon, oder
(vi) einem Sulfonsäuresalz
umfasst.

12. Geformte(r/s) Artikel, Blatt, Folie, Schaum, Laminat oder Faser, umfassend die Polycarbonat-(Co)polymerzusammensetzung gemäss Anspruch 1, 6 oder 9.

13. Verfahren zur Herstellung eines Polycarbonat-(Co)polymers, umfassend die Schritte:
(a) Polymerisieren von
(i) einem oder mehreren Bisphenolethinyl(en) der nachstehenden Formel: 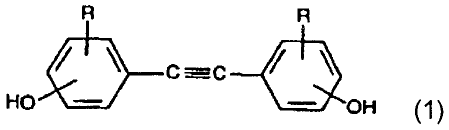 wobei die Hydroxylgruppen an den Phenylringen unabhängig in ortho-, meta-bzw. para-Position sein können und R unabhängig 1, 2, 3 oder 4 Substituenten darstellen kann, die jeweils unabhängig Wasserstoff, Halogen, Alkyl, Aryl oder Arylalkyl, Alkylether, Stickstoffoxid bzw. stickstoffhaltige Gruppen sein können, mit
(ii) gegebenenfalls einem oder mehreren zweiwertigen Phenol(en),
und
(b) Isolieren des resultierenden Polycarbonat-(Co)polymers.

14. Verfahren zur Herstellung des Polycarbonat-(Co)polymers gemäss Anspruch 13, wobei das Polymerisationsverfahren durch ein Grenzflächenpolymerisationsverfahren, umfassend eine Phosgenierungsreaktion, stattfindet.

## Revendications

1. Composition de (co)polymère de polycarbonate comprenant des résidus de :
(i) un ou plusieurs bisphénols éthynyles ayant la formule suivante : 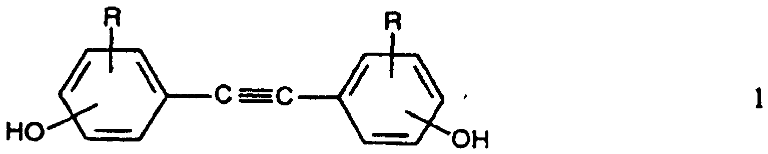 dans laquelle les groupes hydroxyle sur les noyaux de phényle peuvent être indépendamment respectivement aux positions ortho, méta, ou para, et R peut indépendamment représenter 1, 2, 3, ou 4 substituants qui peuvent chacun être indépendamment des groupes contenant respectivement de l'hydrogène, de l'halogène, de l'alkyle, de l'aryle, ou de l'aryle alkyle, de l'éther d'alkyle, de l'oxyde d'azote, ou de l'azote
et
(ii) optionnellement un ou plusieurs phénols dihydriques.

2. Composition de (co)polymère de polycarbonate selon la revendication 1, dans laquelle R est indépendamment de l'hydrogène, du méthyle, de l'isopropyle, du cyclohexane, du phényle, du t-butyle, du fluor, du chlore, du brome, de l'oxyde d'azote, ou du benzotriazolyle.

3. Composition de copolymère de polycarbonate selon la revendication 1, dans laquelle
(i) le bisphénol éthynyle est du 1,2-bis(3-hydroxyphényl)acétylène ; 1,2-bis(4-hydroxyphényl)acétylène ; 1-(3-hydroxyphényl), 2-(4-hydroxyphényl)acétylène ; ou des mélanges de ceux-ci
et
(ii) le phénol dihydrique est du bisphénol-A.

4. Composition de copolymère de polycarbonate selon la revendication 1, dans laquelle
(i) le bisphénol éthynyle est présent en une quantité de 0,1 à 50 pour cent en poids
et
(ii) le phénol dihydrique est présent en une quantité de 99,9 à 50 pour cent en poids, dans laquelle le pourcentage en poids est basé sur le poids combiné total de (i) et (ii).

5. Composition de copolymère de polycarbonate selon la revendication 1, dans laquelle
(i) le bisphénol éthynyle est du 1,2-bis(3-hydroxyphényl)acétylène ; 1,2-bis(4-hydroxyphényl)acétylène ; ou des mélanges de ceux-ci et est présent en une quantité de 0,1 à 50 pour cent en poids
et
(ii) le phénol dihydrique est du bisphénol-A et est présent en une quantité de 99,9 à 50 pour cent en poids,
dans laquelle le pourcentage en poids est basé sur le poids combiné total de (i) et (ii).

6. Composition de (co)polymère de polycarbonate selon la revendication 1, comprenant en outre un ou plusieurs polymères thermoplastiques en mélange.

7. Composition de (co)polymère de polycarbonate selon la revendication 6, dans laquelle le polymère thermoplastique en mélange est un modificateur d'impact.

8. Composition de (co)polymère de polycarbonate selon la revendication 6, dans laquelle le polymère thermoplastique en mélange est de l'ABS polymérisé par masse, de l'ABS polymérisé par émulsion, un polymère de propylène, un copolymère de propylène, ou des mélanges de ceux-ci.

9. Composition de (co)polymère de polycarbonate selon les revendications 1 ou 6, comprenant en outre un ou plusieurs additifs sélectionnés à partir d'un agent de remplissage, une matière de renforcement, un stabilisateur, un pigment, un colorant, un agent de libération de moule, un sel de carbonate, de phosphate ou d'hydroxyde, un oxyde de métal, un lubrifiant, un agent de diffusion de lumière, ou un agent antistatique.

10. Composition de (co)polymère de polycarbonate selon la revendication 9, dans laquelle la matière de renforcement est de la fibre de verre ou de la fibre de carbone.

11. Composition de (co)polymère de polycarbonate selon les revendications 1 ou 6, comprenant en outre un ou plusieurs de
(iv) un composé phosphoré aromatique représenté par la formule : 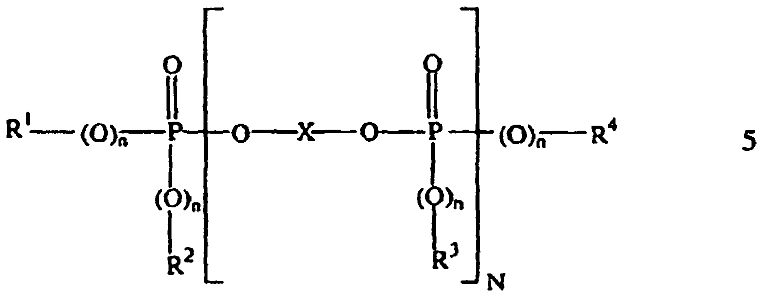 dans laquelle,
R¹, R², R³ et R⁴ indépendamment les uns des autres désignent chacun optionnellement de l'alkyle halogéné en C₁ à C₈, ou cycloalkyle en C₅ à C₆, aryle en C₆ à C₂₀ ou aralkyle en C₇ à C₁₂, dans chaque cas substitué optionnellement par de l'alkyle et/ou de l'halogène,
X désigne un radical aromatique mono- ou polynucléaire ayant de 6 à 30 atomes C,
n indépendamment l'un de l'autre est 0 ou 1,
N représente des valeurs de 0 à 30,
(v) un polymère de polytétrafluoréthylène, un fluorothermoplastique, ou mélange de ceux-ci,
ou
(vi) un sel d'acide sulfonique.

12. Article, feuille, film, mousse, stratifié ou fibre formés comprenant la composition de (co)polymère de polycarbonate selon les revendications 1, 6, ou 9.

13. Procédé pour fabriquer un (co)polymère de polycarbonate comprenant les étapes consistant à :
(a) polymériser
(i) un ou plusieurs bisphénols éthynyles ayant la formule suivante : 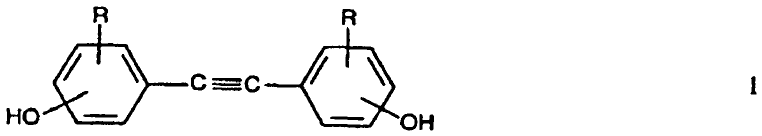 dans laquelle les groupes hydroxyle sur les anneaux de phényle peuvent indépendamment être respectivement aux positions ortho, méta, ou para, et R peut indépendamment représenter 1, 2, 3, ou 4 substituants qui peuvent être chacun indépendamment des groupes contenant respectivement de l'hydrogène, de l'halogène, de l'alkyle, aryle, ou de l'aryle alkyle, de l'éther d'alkyle, de l'oxyde d'azote, ou de l'azote
avec
(ii) optionnellement un ou plusieurs phénols dihydriques
et
(b) isoler le (co)polymère de polycarbonate résultant.

14. Procédé pour fabriquer un (co)polymère de polycarbonate selon la revendication 13, dans lequel le processus de polymérisation s'effectue via un processus de polymérisation interfaciale comprenant une réaction de phosgénation.
